# EUROPÄISCHE PATENTSCHRIFT

(11) **EP 2 282 011 B1**
(45) Veröffentlichungstag und Bekanntmachung des Hinweises auf die Patenterteilung: **28.02.2018**
(21) Anmeldenummer: 10007454.1
(22) Anmeldetag: 19.07.2010
(51) Int. Cl.: F01D 9/00, F01D 25/16, B64D 29/06

(54) **Querschnittsprofil für die Stützen oder die Verkleidung von Stützen und Versorgungsleitungen eines Turbofantriebwerks**
Cross-sectional profile of the supports or of the cover of the supports with supply lines of a Turbofan
Profil transversal des supports ou de la couverture des supports avec des lignes d'alimentation d'un Turbofan

(30) Priorität: 23.07.2009 DE 102009034530
(43) Veröffentlichungstag der Anmeldung: 09.02.2011
(73) Patentinhaber: Rolls-Royce Deutschland Ltd & Co KG, 15827 Blankenfelde-Mahlow (DE)
(72) Erfinder: Clemen, Carsten, Dr., 15749 Mittenwalde (DE)
(74) Vertreter: Hoefer & Partner Patentanwälte mbB

(56) Entgegenhaltungen:
- EP-A2- 0 315 486
- EP-A2- 2 022 938
- US-A- 5 203 163
- US-A1- 2006 226 290
- US-B1- 6 334 753

## Beschreibung

Die Erfindung betrifft ein aerodynamisch geformtes, symmetrisches Querschnittsprofil gemäß Anspruch 1 für die Stützen oder die Verkleidung von Stützen und Versorgungsleitungen im Neben- und Kernstromkanal eines Turbofantriebwerks. Turbofantriebwerke weisen am Lufteintritt einen Fan (oder Bläser) auf, hinter dem der von diesem erzeugte Luftstrom in einen Kernluftstrom und einen Nebenluftstrom aufgeteilt wird. Der Kernluftstrom strömt in einem Kernstromkanal, der von einem den Nebenluftstrom führenden Nebenstromkanal umgeben ist. Die von der Triebwerksverkleidung gebildete Außenwand des Nebenstromkanals ist durch sich radial erstreckende Stützelemente an der Seitenwand des Kernstromkanals, die gleichzeitig die Innenwand des Nebenstromkanals bildet, abgestützt. Darüber hinaus befinden sich im Nebenstromkanal in radialer Richtung verlaufende Versorgungsleitungen für die Flugzeugzelle und für das Triebwerk, die einzeln oder als Gruppe mit aerodynamisch geformten Verkleidungselementen ummantelt sind. Die Stützelemente sind ebenfalls von einem aerodynamisch geformten Verkleidungselement umgeben oder weisen ein aerodynamisch geformtes Querschnittsprofil auf. Auch im Kernstromkanal des Triebwerks sind Stützelemente angeordnet, die aerodynamisch verkleidet sind oder selbst ein aerodynamisch geformtes Profil aufweisen können. Durch die aerodynamische Form der Verkleidung oder der Stützen selbst sollen die Druckverluste im Nebenstromkanal und Kernstromkanal reduziert und Vibrationen und damit verbundene mechanisch und akustisch nachteilige Wirkungen verringert werden. Die aerodynamische Formgebung der Stütz- und Verkleidungselemente stimmt nahezu oder vollständig mit der Form der bekanntermassen verwendeten sogenannten NACA-Profile überein, die als der lokale Dickenverlauf entlang der Sehne des Querschnittsprofils definiert werden. Zwar sind die Druckverluste bei der Anordnung von Verkleidungselementen geringer als ohne Verkleidung, jedoch kann es trotz aerodynamischer Formgebung aufgrund des relativ grossen Volumens der Verkleidungselemente oder der aerodynamisch geformten Stützen zu erheblichen Druckverlusten und Nachläufen kommen, die der Erzielung einer optimalen Triebwerksleistung und eines geringen Kraftstoffverbrauches sowie einer Minimierung von Vibrationen und der Schallemission entgegenstehen.

Die EP 2 022 938 A2 beschreibt eine Stütze, welche in einem Strömungspfad einer Gasturbine angeordnet ist. Die Stütze hat ein symmetrisches Profil, welches im Wesentlichen in der Profilmitte eine maximale Breite aufweist. Nachfolgend zu diesem Maximalwert verläuft die Krümmung des Profils konkav und zeigt einen Wendepunkt, bevor das Profil gradlinig zu einer Hinterkantenposition verläuft.

Aus der US 2006/0226290 A1 und der US 6,334,753 B1 sind jeweils unsymmetrische Schaufelprofile vorbekannt, welche an der Saugseite und an der Druckseite stetig verlaufende Konturen haben.

Der Erfindung liegt die Aufgabe zugrunde, ein aerodynamisch geformtes Querschnittsprofil für die Stützen oder die Verkleidung von Stützen und Versorgungsleitungen im Nebenstromkanal und für die Stützen im Kernstromkanal eines Turbofantriebwerks anzugeben, das eine Verminderung der Druckverluste, der Schallemission und der Vibrationen bewirkt.

Erfindungsgemäss wird die Aufgabe mit einem gemäss den Merkmalen des Patentanspruchs 1 gestalteten Querschnittsprofil gelöst. Zweckmässige Weiterbildungen der Erfindung sind Gegenstand der Unteransprüche.

Ausgehend von einem aerodynamischen Querschnittsprofil das durch einen jeweiligen Verlauf der lokalen Dicke und eine jeweilige Position der maximalen Dicke beidseitig über der sich von der Vorderkante bis zur Hinterkante der Stütze oder Verkleidung erstreckenden zentralen Sehne bestimmt ist, besteht der Grundgedanke der Erfindung darin, dass der Verlauf der lokalen Dicke zwischen der Position der maximalen Dicke und einer bestimmten, bei 95% der Sehnenlänge liegenden Hinterkantenposition einen ersten

Wendepunkt (WP1) und einen anschließenden zweiten Wendepunkt (WP2) aufweist. Aufgrund der in diesem vorgegebenen Bereich liegenden Wendepunkte im Verlauf der lokalen Dicke werden Strömungsablösungen verhindert oder derart minimiert, das Druckverluste und der dadurch bedingte höhere Kraftstoffverbrauch sowie die Schallemission und Vibrationen verringert werden können.

In weiterer Ausbildung der Erfindung ist der Verlauf der lokalen Dicke im Bereich der Wendepunkte so gestaltet, dass ausgehend von der Position der maximalen Dicke der zunächst negative Gradient des Verlaufs der lokalen Dicke im ersten Wendepunkt geringer oder Null oder positiv wird und entsprechend dem vorhergehenden Gradienten im zweiten Wendepunkt entweder zunehmend negativ oder negativ oder abnehmend positiv wird.

In weiterer Ausbildung der Erfindung hat die Hinterkantendicke in der Hinterkantenposition einen Wert zwischen 10% und 65% der maximalen Dicke .

Die lokale Dicke im ersten Wendepunkt ist immer kleiner als die maximale Dicke und im zweiten Wendepunkt immer größer als die Hinterkantendicke in der Hinterkantenposition

Der Verlauf der lokalen Dicke bis zur maximalen Dicke, die Position der maximalen Dicke die maximale Dicke selbst sowie der Ort der Anordnung der Wendepunkte zwischen der Position der maximalen Dicke und der Hinterkantenposition können beliebig gestaltet sein.

Ein Ausführungsbeispiel der Erfindung wird anhand der Zeichnung näher erläutert. Es zeigen:
- Fig. 1: eine stark vereinfachte schematische Schnittansicht eines Turbofantriebwerks in zwei unterschiedlichen Ausführungsvarianten des Nebenstromkanals;
- Fig. 2: eine schematische Darstellung von im Nebenstromkanal als Bündel angeordneten, mit einer herkömmlichen Verkleidung umhüllten Versorgungsrohren und -leitungen;
- Fig. 3: eine Darstellung zur Definition des Querschnittsprofils für eine Stütze oder eine Verkleidung;
- Fig. 4: den Dickenverlauf bei einem gemäß Fig. 3 definierten Querschnittsprofil; und
- Fig. 5 - 7: verschiedene Ausführungsformen von Querschnittsprofilen von Stützen oder Verkleidungen.

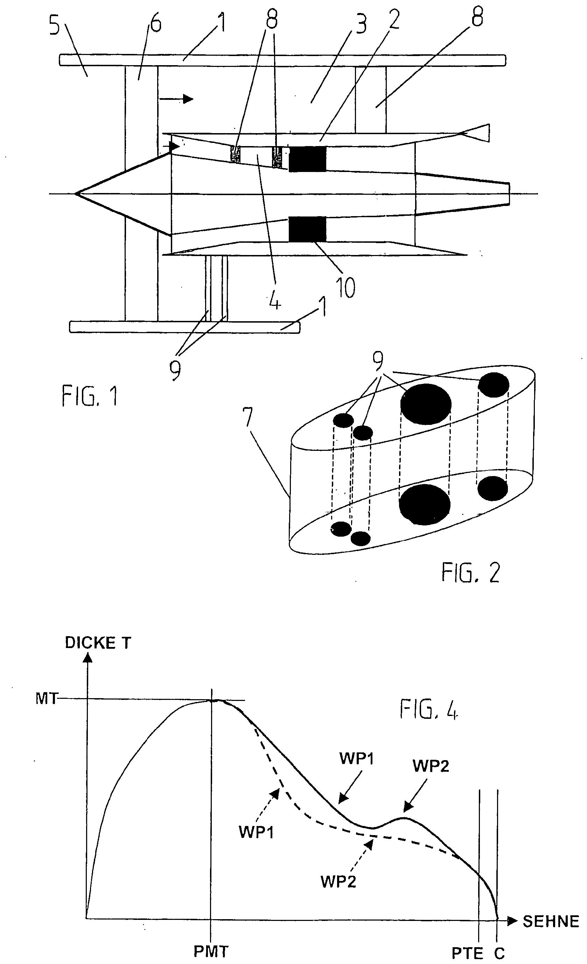

Das in Fig. 1 dargestellte Turbofantriebwerk umfasst einen von einer Triebwerksverkleidung 1 und einer inneren Seitenwand 2 begrenzten Nebenstromkanal 3 sowie einen Kernstromkanal 4 mit stromauf in einem Einlass 5 angeordnetem Fan 6. Im Nebenstromkanal 3 sind mit einer Verkleidung 7 (Fig. 2) umhüllte Stützen 8 und Versorgungsleitungen 9 angeordnet. Weitere - mit einer Verkleidung (nicht dargestellt) versehene - Stützen 8 sind im Kernstromkanal 4 stromauf der Brennkammer 10 angeordnet.

Das Querschnittsprofil der Verkleidung 7 ist durch eine sich zwischen der Vorderkante LE und der Hinterkante TE erstreckende Sehne C und den Verlauf der lokalen Dicke T über der Sehnenlänge sowie eine maximale Dicke MT in einer Position PMT (Position der maximalen Dicke) und eine Hinterkantendicke TET in einer Hinterkantenposition PTE (Position der Hinterkantendicke) definiert. Der Abstand, das heißt die Teilsehnenlänge, zwischen der Position der maximalen Dicke PMT und der Vorderkante LE bzw. der Hinterkante TE wird mit CL bzw. CT bezeichnet.

Der Verlauf der lokalen Dicke T entlang der Sehne C von der Vorderkante LE bis zur maximalen Dicke MT in der Position PMT ist in herkömmlicher Weise gestaltet. Das gilt gleichermaßen für den Verlauf der lokalen Dicke T zwischen der Hinterkantenposition PTE und der Hinterkante TE. Die Hinterkantenposition PTE ist auf 95% der Länge der Sehne C des Querschnittsprofils festgelegt und die lokale Dicke T in dieser Position, das heißt die Hinterkantendicke TET, liegt im Bereich von 10% bis 65% der maximalen Dicke (0,10<TET/MT<0,65). In dem Verlauf der lokalen Dicke T zwischen der - beliebig angeordneten - Position der maximalen Dicke PMT und der festgelegten Hinterkantenposition PTE sind an beliebiger Stelle - wie beispielhaft in Fig. 4 anhand der durchgezogenen oder der strichlierten Linie gezeigt - zwei Wendepunkte WP1 und WP2 ausgebildet. Zwischen der Position der maximalen Dicke PMT und dem ersten Wendepunkt WP1 hat der Verlauf der lokalen Dicke T einen zunehmenden negativen Gradienten, der bis zum zweiten Wendepunkt WP2 wieder abnimmt (strichlierte Linie in Fig. 4) und Null oder auch positiv (durchgezogene Linie in Fig. 4) werden kann, wobei aber die lokale Dicke T kleiner als die maximale Dicke MT bleibt. Vom zweiten Wendepunkt WP2 bis zur Hinterkantenposition PTE nimmt der Gradient wieder ab, das heißt, der Gradient wird kleiner, wenn er zuvor positiv war, der Gradient wird negativ, wenn er zuvor Null war und der Gradient wird zunehmend negativ, wenn er zuvor bereits negativ war.

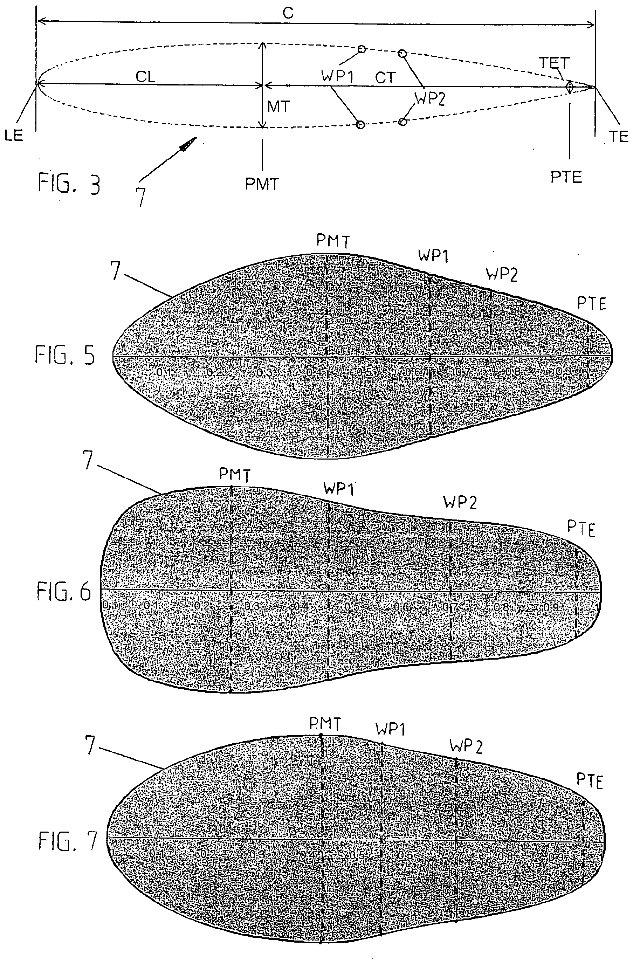

Während der Verlauf der lokalen Dicke T in Fig. 4 der besseren Anschaulichkeit halber übertrieben dargestellt ist, zeigen die Figuren 5 bis 7 Ausführungsbeispiele von Querschnittsprofilen von Verkleidungen 7, bei denen die Position der maximalen Dicke PMT unterschiedlich ist und die Hinterkantenposition PTE jeweils bei 95% der Länge Sehne C liegt und die Hinterkantendicke TET an dieser Stelle einen zwischen 10 und 65% der maximalen Dicke PMT (0,10<TET/MT<0,65) liegenden Wert aufweist.

### Bezugszeichenliste

- 1: Triebwerksverkleidung
- 2: innere Seitenwand
- 3: Nebenstromkanal
- 4: Kernstromkanal
- 5: Einlass
- 6: Fan
- 7: Verkleidung
- 8: Stützen
- 9: Versorgungsleitungen
- 10: Brennkammer
- C: Sehne
- T: lokale Dicke über C
- MT: maximale Dicke
- TET: Hinterkantendicke
- PMT: Position der maximalen Dicke
- PTE: Hinterkantenposition
- LE: Vorderkante von 7
- TE: Hinterkante von 7
- CL: Sehnenlänge zwischen LE und PMT
- CT: Sehnenlänge zwischen PMT und TE
- WP1: erster Wendepunkt
- WP2: zweiter Wendepunkt

## Patentansprüche

1. Aerodynamisch geformtes, symmetrisches Querschnittsprofil für die Stützen (8) oder die Verkleidung (7) von Stützen (8) und Versorgungsleitungen (9) im Neben- und Kernstromkanal (3, 4) eines Turbofantriebwerks, das durch einen Verlauf der lokalen Dicke (T) und eine Position (PMT) der maximalen Dicke (MT) beidseitig über der sich von der Vorderkante (LE) bis zur Hinterkante (TE) der Stütze oder Verkleidung (7) erstreckenden zentralen Sehne (C) bestimmt ist, wobei zur Vermeidung von Strömungsablösungen der Verlauf der lokalen Dicke (T) zwischen der Position (PMT) der maximalen Dicke (MT) und einer bestimmten Hinterkantenposition (PTE), welche bei 95 % der Gesamtlänge der zentralen Sehne (C) definiert ist, mit einer Hinterkantendicke (TET) einen ersten Wendepunkt (WP1) und einen anschließenden zweiten Wendepunkt (WP2) aufweist, **dadurch gekennzeichnet dass**
das Querschnittsprofil einen ersten Bereich zwischen der Vorderkante (LE) bis zur Position der maximalen Dicke (PMT), einen zweiten Bereich zwischen der Position der maximalen Dicke (PMT) und dem ersten Wendepunkt (WP1), einen dritten Bereich zwischen dem ersten Wendepunkt (WP1) und dem zweiten Wendepunkt (WP2) und einen vierten Bereich zwischen dem zweiten Wendepunkt (WP2) und der Hinterkante (TE) aufweist,
und dass der Verlauf der lokalen Dicke (T) zwischen der Position der maximalen Dicke (PMT) und dem ersten Wendepunkt (WP1) einen zunehmend negativen Gradienten aufweist, der ferner bis zum zweiten Wendepunkt (WP2) wieder abnimmt und Null oder positiv ist, wobei die lokale Dicke kleiner als die maximale Dicke (MT) bleibt, und wobei vom zweiten Wendepunkt (WP2) bis zu Hinterkantenposition (PTE) der Gradient wieder abnimmt.

2. Querschnittsprofil nach Anspruch 1, **dadurch gekennzeichnet, dass** der zweite Gradient in dem zweiten Bereich zunehmend geringer ist, dass der Gradient im dritten Bereich weniger negativ ist als der Gradient im zweiten Bereich, und dass der Gradient im dritten Bereich negativ oder positiv ist.

3. Querschnittsprofil nach Anspruch 2, **dadurch gekennzeichnet, dass** die Hinterkantendicke (TET) über der Sehne (C) in der Hinterkantenposition (PTE) einen Wert zwischen 10% und 65% der maximalen Dicke (MT) über der Sehne (C) aufweist.

4. Querschnittsprofil nach Anspruch 2, **dadurch gekennzeichnet, dass** die lokale Dicke (T) im ersten Wendepunkt (WP1) immer kleiner als die maximale Dicke (MT) ist und im zweiten Wendepunkt (WP2) immer größer als in die Dicke der Hinterkantenposition (PTE) ist.

5. Querschnittsprofil nach Anspruch 1, **dadurch gekennzeichnet, dass** im ersten Bereich der Verlauf der lokalen Dicke (T) auf herkömmliche Art beliebig gestaltet ist.

## Claims

1. Aerodynamically shaped, symmetrical cross-sectional profile for the struts (8) or the fairing (7) of struts (8) and supply lines (9) in the bypass and the core-flow duct (3, 4) of a turbofan engine, defined by a course of the local thickness (T) and a position (PMT) of the maximum thickness (MT) on both sides over the central chord (C) extending from the leading edge (LE) to the trailing edge (TE) of the strut or fairing (7), where, in order to avoid flow separations, the course of the local thickness (T) between the position (PMT) of the maximum thickness (MT) and a certain trailing-edge position (PTE), which is defined at 95 % of the total length of the central chord (C), has a first turning point (WP1) with a trailing-edge thickness (TET) and a subsequent second turning point (WP2), **characterized in that** the cross-sectional profile has a first zone extending from the leading edge (LE) to the position of the maximum thickness (PMT), a second zone between the position of the maximum thickness (PMT) and the first turning point (WP1), a third zone between the first turning point (WP1) and the second turning point (WP2) and a fourth zone between the second turning point (WP2) and the trailing edge (TE), and that the course of the local thickness (T) between the position of the maximum thickness (PMT) and the first turning point (WP1) has an increasingly negative gradient, which furthermore again decreases up to the second turning point (WP2) and is zero or positive, where the local thickness remains smaller than the maximum thickness (MT), and where the gradient decreases again from the second turning point (WP2) up to the trailing-edge position (PTE).

2. Cross-sectional profile in accordance with Claim 1, **characterized in that** the second gradient in the second zone is increasingly smaller, that the gradient in the third zone is less negative than the gradient in the second zone, and that the gradient in the third zone is negative or positive.

3. Cross-sectional profile in accordance with Claim 2, **characterized in that** the trailing-edge thickness (TET) over the chord (C) in the trailing-edge position (PTE) has a value between 10 percent and 65 percent of the maximum thickness (MT) over the chord (C).

4. Cross-sectional profile in accordance with Claim 2, **characterized in that** the local thickness (T) in the first turning point (WP1) is always smaller than the maximum thickness (MT) and, in the second turning point (WP2), is always greater than the thickness of the trailing-edge position (PTE).

5. Cross-sectional profile in accordance with Claim 1, **characterized in that** in the first zone, the course of the local thickness (T) is conventionally optional in design.

## Revendications

1. Profil en coupe transversale, symétrique, formé de manière aérodynamique pour les montants (8) ou l'habillage (7) de montants (8) et de conduites d'alimentation (9) dans le canal de flux secondaire et le canal de flux principal (3, 4) d'un turboréacteur à soufflante, qui est déterminé par une évolution de l'épaisseur locale (T) et une position (PMT) de l'épaisseur maximale (MT) des deux côtés le long de la corde centrale (C) s'étendant du bord d'attaque (LE) au bord de fuite (TE) du montant ou de l'habillage (7), sachant que pour éviter des décollements de flux, l'évolution de l'épaisseur locale (T) entre la position (PMT) de l'épaisseur maximale (MT) et une position donnée du bord de fuite (PTE), qui est définie à 95 % de la longueur totale de la corde centrale (C), présente un premier point d'inflexion (WP1) avec une épaisseur de bord de fuite (TET) et un deuxième point d'inflexion consécutif (WP2), **caractérisé en ce que** le profil en coupe transversale présente une première zone entre le bord d'attaque (LE) et la position de l'épaisseur maximale (PMT), une deuxième zone entre la position de l'épaisseur maximale (PMT) et le premier point d'inflexion (WP1), une troisième zone entre le premier point d'inflexion (WP1) et le deuxième point d'inflexion (WP2) et une quatrième zone entre le deuxième point d'inflexion (WP2) et le bord de fuite (TE), et que l'évolution de l'épaisseur locale (T) entre la position de l'épaisseur maximale (PMT) et le premier point d'inflexion (WP1) présente un gradient négatif croissant, qui diminue à nouveau ensuite jusqu'au deuxième point d'inflexion (WP2) et est nul ou positif, sachant que l'épaisseur locale est inférieure à l'épaisseur maximale (MT) et que le gradient diminue à nouveau du deuxième point d'inflexion (WP2) à la position du bord de fuite (PTE).

2. Profil en coupe transversale selon la revendication n° 1, **caractérisé en ce que** le deuxième gradient dans la deuxième zone est de plus en plus faible, que le gradient dans la troisième zone est moins négatif que le gradient dans la deuxième zone et que le gradient dans la troisième zone est négatif ou positif.

3. Profil en coupe transversale selon la revendication n° 2, **caractérisé en ce que** l'épaisseur du bord de fuite (TET) le long de la corde (C) dans la position du bord de fuite (PTE) présente une valeur comprise entre 10% et 65% de l'épaisseur maximale (MT) le long de la corde (C).

4. Profil en coupe transversale selon la revendication n° 2, **caractérisé en ce que** l'épaisseur locale (T) est, dans le premier point d'inflexion (WP1), toujours inférieure à l'épaisseur maximale (MT) et, dans le deuxième point d'inflexion (WP2), toujours supérieure à l'épaisseur de la position du bord de fuite (PTE).

5. Profil en coupe transversale selon la revendication n° 1, **caractérisé en ce que,** dans la première zone, l'évolution de l'épaisseur locale (T) est conçue librement, de manière conventionnelle.
